# EUROPÄISCHE PATENTSCHRIFT

(11) **EP 2 921 343 B1**
(45) Veröffentlichungstag und Bekanntmachung des Hinweises auf die Patenterteilung: **31.01.2018**
(21) Anmeldenummer: 14194426.4
(22) Anmeldetag: 24.11.2014
(51) Int. Cl.: B60N 2/50, B60N 2/52, B60N 2/02

(54) **Vorrichtung zum Abfedern eines Federungsoberteils in wenigstens einer Raumrichtung gegenüber einem relativ dazu bewegbaren Federungsunterteil**
Device for suspending a suspension upper part in at least one direction in space with respect to a suspension lower part which can be moved relative to it
Dispositif destiné à équiper d'une suspension une partie supérieure de ressort dans au moins une direction dans l'espace par rapport à une partie inférieure de ressort mobile par rapport à celle-ci

(30) Priorität: 20.02.2014 DE 102014002210
(43) Veröffentlichungstag der Anmeldung: 23.09.2015
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- EP-B1- 0 002 332
- DE-A1- 2 707 184
- DE-A1- 2 849 700
- FR-A1- 2 286 022

## Beschreibung

Die Erfindung betrifft eine Vorrichtung zum Abfedern eines Federungsoberteils in wenigstens einer Raumrichtung gegenüber einem relativ dazu bewegbaren Federungsunterteil nach dem Oberbegriff des Patentanspruchs 1.

Derartige Vorrichtungen werden häufig dazu benutzt, um Fahrzeugsitze während eines Betriebes eines Fahrzeuges abzufedern. Dabei ist das Federungsoberteil mit der Sitzfläche des Fahrzeugsitzes verbunden, während das Federungsunterteil an dem Fahrzeug bzw. dessen Karosserie ortsfest angeordnet ist.

Problematisch bei derartigen Vorrichtungen zum Abfedern eines Federungsoberteils gegenüber einem Federungsunterteil ist allerdings, dass während des Betriebes der Vorrichtung, insbesondere in einem Fahrzeugsitz, durch in die Vorrichtung eingebrachte Kräfte temporäre Abweichungen von einem voreingestellten Abstand zwischen Federungsunter- und Federungsoberseite auftreten.

Das Dokument DE2707184 weist eine gattungsgemässe Vorrichtung zum Abfedern eines Federungsoberteils gegenüber einem Federungsunterteil.

Aufgabe der Erfindung ist es daher, eine Vorrichtung der eingangs genannten Art derart weiterzubilden, dass solche Abweichungen während des Betriebes der Vorrichtung minimiert werden.

Gelöst wird diese Aufgabe durch eine Vorrichtung mit allen Merkmalen des Patentanspruchs 1. Vorteilhafte Ausgestaltungen der Vorrichtung finden sich in den Unteransprüchen 2 bis 7. Weiterhin wird diese Aufgabe gelöst durch einen Sitz mit allen Merkmalen des Patentanspruchs 8 und ein Fahrzeug mit allen Merkmalen des Patentanspruchs 9.

Die erfindungsgemäße Vorrichtung zum Abfedern eines Federungsoberteils in wenigstens einer Raumrichtung gegenüber einem relativ dazu bewegbaren Federungsunterteil, bei dem zum Abfedern eine zwischen dem Federungsoberteil und dem Federungsunterteil wirkende Federeinrichtung vorgesehen ist, weist daher ein Stellglied auf, durch welches eine Kraft bidirektional in Wirkrichtung der Federeinrichtung in die Vorrichtung einleitbar ist, wobei dieses Stellglied über eine Steuereinrichtung ansteuerbar ist, wobei das Stellglied einen, als Drehfeldmagnet ausgebildeten Antrieb und eine durch den Antrieb antreibbare, als Welle ausgebildete Koppelstange aufweist, sodass durch ein Verdrehen der Koppelstange ein Abstand zwischen Federungsunterteil und Federungsoberteil variiert werden kann. In einem Fahrzeugsitz wird eine solche bidirektional einleitbare Kraft in der Regel in einer positiven und negativen Z- beziehungsweise Fahrzeughöhenrichtung einleitbar sein. Allerdings ist es auch denkbar, insbesondere bei einem Einsatz dieser Vorrichtung in einem Fahrzeugsitz solche bidirektionalen Kräfte alternativ oder zusätzlich sowohl in positiver und negativer X- beziehungsweise Längsrichtung als auch in positiver und negativer Y- beziehungsweise Breitenrichtung einzuleiten.

Durch die erfindungsgemäße Ausgestaltung der Vorrichtung ist es nunmehr möglich, die Vorrichtung über das Stellglied bidirektional in Wirkrichtung der Federeinrichtung aktiv zu regeln, sodass durch das Stellglied zum einen eine Nivellierung bei temporären Abweichungen des Abstandes zwischen Federungsunter- und Federungsoberseite und zum anderen ein aktiver Eingriff in die Schwingungsisolation erfolgt.

Dabei weist das Stellglied reinen als Drehfeldmagnet ausgebildeten Antrieb und eine durch den Antrieb antreibbare als Welle ausgebildete Koppelstange auf, sodass durch ein Verdrehen der Koppelstange durch den Antrieb beziehungsweise den Drehfeldmagneten ein Abstand zwischen Federungsunterteil und Federungsoberteil variiert werden kann. Durch den Antrieb und die damit gekoppelte Koppelstange ist es nunmehr möglich, Bewegungen, die beim Betrieb der Vorrichtung entstehen, aktiv entgegenzuwirken. Insbesondere die Ausbildung des Antriebs als Drehfeldmagnet, der auch als Stillstandsmotor bezeichnet wird, ist besonders vorteilhaft, da ein solches Drehfeldmagnet auch im Dauerbetrieb ein Stillstanddrehmoment erzeugen kann.

Dabei hat es sich als vorteilhaft erwiesen, die als Welle ausgebildete Koppelstange so auszuwählen, dass der Antrieb der als Welle ausgebildeten Koppelstange sowohl über den als Drehfeldmagnet ausgebildeten Antrieb, als auch von der Federeinrichtung erzeugt werden kann. In keinem Fall liegt dabei eine Selbsthemmung über die als Welle ausgebildete Koppelstange vor.

Nach einem weiteren Gedanken der Erfindung weist die Federeinrichtung eine zwischen dem Federungsoberteil und dem Federungsunterteil angeordnete Feder, welche vorzugsweise als Luftfeder ausgebildet ist, und eine das Federungsoberteil mit dem Federungsunterteil gegeneinander beweglich verbindende Schereneinrichtung auf. Eine derartige Ausgestaltung der erfindungsgemäßen Vorrichtung eignet sich besonders gut für eine Anwendung als Federung für einen Sitz, insbesondere für einen Fahrzeugsitz. Die erfindungsgemäße Vorrichtung ist dabei in einfacher Weise und kompakt zwischen der Sitzfläche und der Fahrzeugkarosserie anordnenbar, sodass kein zusätzlicher Platzaufwand dafür benötigt wird.

Dabei hat es sich als vorteilhaft erwiesen, dass die Schereneinrichtung eine erste, aus einer ersten Innenschwinge und einer ersten Außenschwinge bestehende Schere und eine zweite, aus einer zweiten Innenschwinge und einer zweiten Außenschwinge bestehende Schere aufweist, die vorzugsweise über wenigstens eine Querverbindung miteinander verbunden sind. Durch diese Ausgestaltung der Erfindung ist es möglich, die Vorrichtung besonders stabil in Wirkrichtung der Feder auszugestalten, sodass hierdurch bereits Kippbewegungen der Federungsoberseite gegenüber der Federungsunterseite wirkungsvoll vorgebeugt sind.

Dabei kann der Antrieb fest an dem Federungsoberteil beziehungsweise dem Federungsunterteil angeordnet und die als Welle ausgebildete Koppelstange als eine Festlagerquerverbindung zwischen der ersten Innenschwinge und der zweiten Innenschwinge oder zwischen der ersten Außenschwinge und der zweiten Außenschwinge ausgebildet und in Festlager drehbar gelagert sein.

Nach einem besonders vorteilhaften Gedanken der Erfindung ist die als Welle ausgebildete Koppelstange gefedert mit wenigstens einem Federelement ausgebildet. Durch diese Ausgestaltung der Erfindung wird bei einer Einleitung einer Kraft in die erfindungsgemäße Vorrichtung zuerst das wenigstens eine Federelement der Koppelstange vorgespannt und erst nachfolgend der Antrieb aktiviert. Durch diese Koppelung des Antriebs mit einer mit wenigstens einem Federelement ausgestalteten als Welle ausgebildeten Koppelstange wird, vor allem im hochfrequenten beziehungsweise kurzhubigen Arbeitsspektrum der erfindungsgemäßen Vorrichtung ein permanentes Mitdrehen des Antriebs vermieden. Durch die Überlagerung von verschiedenen vorhandenen Federkennlinien, zum einen der Feder der Federeinrichtung und zum anderen diesem wenigstens einem Federelement der als Welle ausgebildeten Koppelstange, wird ein breites Spektrum für die zu isolierenden Einleitungsfrequenzen erreicht. Das nutzbare Kraftfeld besteht dabei aus der Federrate der Federeinrichtung und der Federrate des als Entkopplungsfeder dienenden wenigstens einen Federelementes der Koppelstange sowie des Kraftspektrums des Antriebs. Dabei dient die Feder der Federeinrichtung, die vorliegend nur als passive Komponente wirkt, als Basis zur Aufnahme der Grundlast, die als Masse auf der erfindungsgemäßen Vorrichtung einwirkt. Hierbei wird beim Neubelegen der erfindungsgemäßen Vorrichtung eine Auflast von einer vorbestimmten Kraft auf ein vorbestimmtes Abstandsniveau zwischen Federungsunter- und Federungsoberseite gehoben. Die verfügbare Kraft des Antriebes kann nun in beiden Richtungen der Wirkrichtung der Federeinrichtung über den als Drehfeldmagneten ausgebildeten Antrieb erzeugt werden. Diese Kraft des Antriebs wird im Betrieb der erfindungsgemäßen Vorrichtung dazu genutzt, um temporäre Abstandsabweichungen zwischen Federungsunter- und Federungsoberseite zu korrigieren, sodass durch die erfindungsgemäße Vorrichtung der vorgegebene Abstand zwischen Federungsunter- und Federungsoberseite permanent angestrebt wird und nur minimale Abweichung davon auftreten.

Dabei hat es sich als vorteilhaft erwiesen, dass wenigstens ein Bewegungssensor vorgesehen ist, mit dem die Bewegungen in der wenigstens einen Raumrichtung des Federungsoberteils gegenüber dem Federungsunterteil feststellbar sind. Die von dem Bewegungssensor ermittelten Daten sind dabei vorzugsweise an die Steuerungseinrichtung weiterleitbar. Durch die durch diesen Bewegungssensor, der als Weg- oder Winkelsensor ausgebildet sein kann, wird die Dynamik, das heißt die Bewegung der Federungsunter- gegenüber der Federungsoberseite erfasst und an die Steuereinrichtung weitergegeben. Der Messbereich entspricht dabei dem Gesamthub der Federeinrichtung. Bei einer Aktivregelung der erfindungsgemäßen Vorrichtung wird dabei das komplette Kraftspektrum des Antriebs, beziehungsweise des Drehfeldmagneten ausgenutzt, um Krafteinleitungen, die in die erfindungsgemäße Vorrichtung eingebracht werden, zu beeinflussen.

Die erfindungsgemäße Vorrichtung kann dabei sowohl mit der Krafteinleitung wirken, das heißt dass die Stützkraft zum Tragen einer Masse durch die Federungsoberseite reduziert wird, als auch gegen die Krafteinleitung eingesetzt werden, wobei in diesem Fall die Kraft gegenüber der Krafteinleitung erhöht wird.

Die hochfrequente Regelung, welche zur Schwingungsbeeinflussung erforderlich ist, erfolgt dabei über die Änderungen des zugeführten Stroms beziehungsweise der Drehrichtung des Antriebs beziehungsweise des Drehfeldmagneten. Dabei ist die Art und Intensität der Regelung in einem Regelalgorithmus der Steuereinrichtung abgelegt. Erfasst werden durch die erfindungsgemäße Vorrichtung die Art und Intensität der Krafteinleitung über den Beschleunigungsaufnehmer, der am Federungsunterteil befestigt ist, und den Bewegungssensor der den Abstand beziehungsweise dessen Abweichung zwischen Federungsoberteil und Federungsunterteil bewertet.

Nach einem weiteren Gedanken der Erfindung ist zur Dämpfung von Schwingungen der Federeinrichtung ein Stoßdämpfer vorgesehen.

Weiterhin betrifft die Erfindung auch einen Sitz, insbesondere einen Fahrzeugsitz, mit einer zuvor beschriebenen erfindungsgemäßen Vorrichtung und auch ein Fahrzeug mit wenigstens einem solchen Sitz bzw. mit wenigstens einer zuvor beschriebenen erfindungsgemäßen Vorrichtung.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

### Es zeigen:

- Figur 1:: ein Ausführungsbeispiel einer erfindungsgemäßen Vorrichtung in einer perspektivischen Ansicht,
- Figur 2:: die erfindungsgemäße Vorrichtung gemäß Figur 1 in einer anderen perspektivischen Ansicht,
- Figur 3:: die erfindungsgemäße Vorrichtung der Figuren 1 und 2 in einer seitlichen Ansicht,

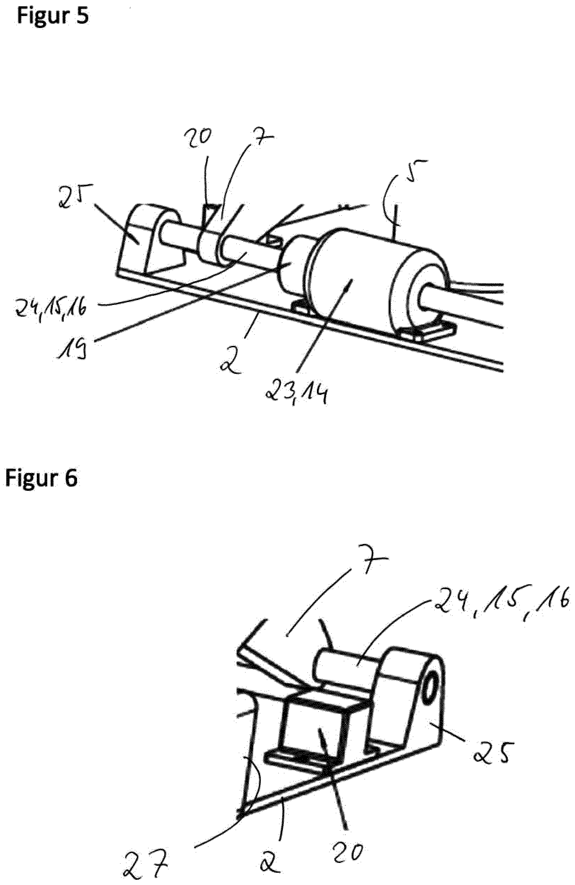

- Figur 4a bis 4c:: die erfindungsgemäße Vorrichtung der Figuren 1 bis 5 in unterschiedlichen Belastungszuständen,
- Figur 5:: eine Detailansicht einer erfindungsgemäßen Vorrichtung gemäß den Figuren 1 und 2,
- Figur 6:: eine weitere Detailansicht einer erfindungsgemäßen Vorrichtung gemäß den Figuren 1 und 2, und
- Figur 7:: ein Kraft-Weg-Diagramm einer erfindungsgemäßen Vorrichtung.

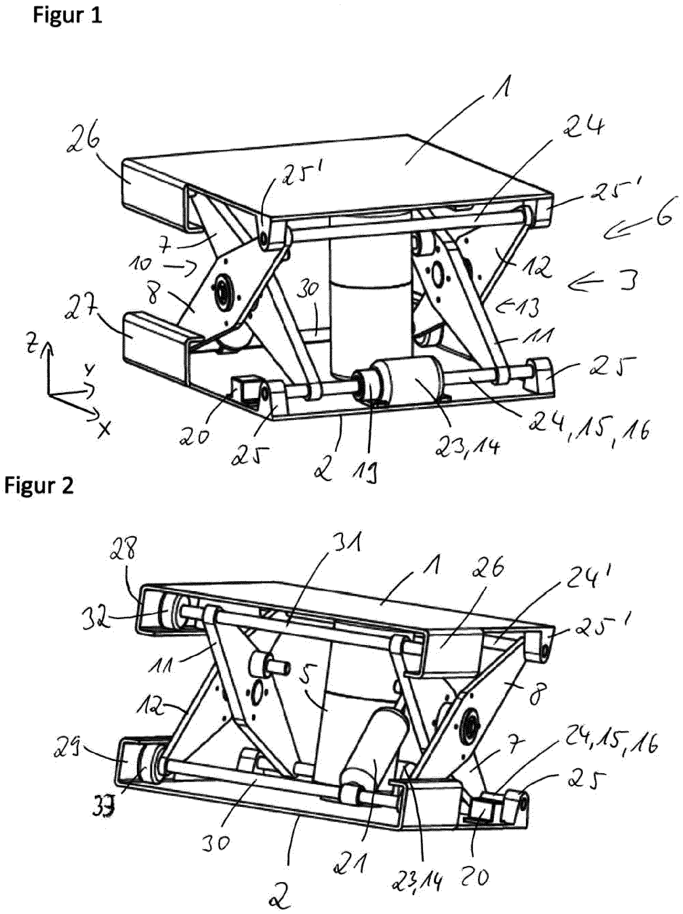

In den Figuren 1 bis 4c ist ein Ausführungsbeispiel einer erfindungsgemäßen Vorrichtung in verschiedenen Ansichten dargestellt, das bei einem Fahrzeugsitz zur Abfederung von Schwingungen während des Betriebes des Fahrzeugs zum Einsatz kommt.

Die Vorrichtung weist dabei eine Federungsoberseite 1 und eine Federungsunterseite 2 auf, zwischen denen eine Federeinrichtung 3 angeordnet ist. Die Federeinrichtung 3 besteht im vorliegenden Fall aus einer Schereneinrichtung 6 und einer als Luftfeder ausgebildeten Feder 5, mittels welcher Bewegungen in einer Höhenrichtung Z abgefedert werden können. Die Schereneinrichtung 6 besteht dabei aus einer ersten Schere 10 und einer zweiten Schere 13. Die erste Schere 10 besteht dabei aus einer ersten Innenschwinge 7 und einer ersten Außenschwinge 8, wobei diese in etwa in ihrer Mitte gegeneinander verschwenkbar miteinander verbunden sind. Die zweite Schere 13 besteht aus einer zweiten Innenschwinge 11 und einer zweiten Außenschwinge 12, die ebenfalls in etwa in ihrer Mitte gegeneinander verschwenkbar miteinander verbunden sind. Die erste Innenschwinge 7 und die zweite Innenschwinge 11 sind dabei mit ihrem unteren Ende fest und unverdrehbar an einer Festlagerquerverbindung 24 angeordnet, welche in fest an der Federungsunterseite 2 angeordneten Festlagern 25 drehbar gelagert ist. An ihren oberen Enden sind die erste Innenschwinge 7 und die zweite Innenschwinge 11 mittels einer Loslagerquerverbindung 31 miteinander verbunden, an deren Enden sich Rollen 32 befinden, die in an der Fahrzeugoberseite angeordneten Führungsschienen 26 und 28 geführt sind.

In analoger Weise sind die erste Außenschwinge 8 und die zweite Außenschwinge 12 an ihren oberen Enden mittels einer Festlagerquerverbindung 24' in an der Federungsoberseite angeordneten Festlagern 25' gelagert. An ihrem unteren Ende sind die erste Außenschwinge 8 und die zweite Außenschwinge 12 über eine weitere Loslagerquerverbindung 30 miteinander verbunden, wobei an den Enden der Loslagerquerverbindung 30 Rollen 33 angeordnet sind, die in Führungsschienen 27 und 29 geführt sind, welche an der Federungsunterseite 2 angeordnet sind.

Mittels der gesamten Federeinrichtung 6 kann dabei der Abstand zwischen der Federungsoberseite 1 und der Federungsunterseite 2 durch Krafteintrag variiert werden, beispielsweise wenn die in einem Fahrzeugsitz angeordnete Vorrichtung durch eine auf dem Fahrzeugsitz platznehmende Person mit einer Kraft beaufschlagt wird.

Da bei einem Betrieb der Vorrichtung in einem Fahrzeugsitz bei einem Betrieb des Fahrzeuges Schwingungen durch Unebenheiten in der Fahrbahnoberfläche, auf der sich das Fahrzeug bewegt, oder durch Gewichtsverlagerung der auf dem Sitz platznehmenden Person die auf die erfindungsgemäße Vorrichtung eingebrachte Kraft variiert, ist zum Ausgleich dieses Krafteintrags ein Stellglied 4 vorgesehen, mittels welchem dem von außen eingebrachten Krafteintrag in die Vorrichtung entgegengewirkt werden kann.

Im vorliegenden Ausführungsbeispiel besteht das Stellglied 4 aus einem als Drehfeldmagnet 14 ausgebildeten Antrieb 23, mittels welchem die Festlagerquerverbindung 24, welche vorliegend als eine als Welle 15 ausgebildete Koppelstange 16 ausgebildet ist, verdreht werden kann. Die als Welle 15 ausgebildete Koppelstange 16 weist dazu auf ihrem Umfang Eingriffsmittel auf, in die der als Drehfeldmagnet 14 ausgebildete Antrieb 23 eingreifen kann und somit die als Welle 15 ausgebildete Koppelstange 16 verdrehen kann. Der als Drehfeldmagnet 14 ausgebildete Antrieb 23 ist dabei fest an der Federungsunterseite 2 angeordnet, während die Koppelstange 16 drehbar in zwei Festlager 25 gelagert ist. Da die Koppelstange 16 mit den Innenschwingen 7 und 11 der Scheren 10 und 13 der Schereneinrichtung 6 fest und unverdrehbar verbunden ist, werden beim Verdrehen der Koppelstange 16 durch den Drehfeldmagneten 14 die Innenschwingen 7 und 11 der Scheren 10 und 13 mit verdreht und somit die Scheren 10 und 13 der Schereneinrichtung geöffnet verstellt, sodass sich der Abstand zwischen Federungsoberseite 1 und Federungsunterseite 2 verändert.

Damit Bewegungen und Beschleunigungen der Federungsoberseite 1 gegenüber der Federungsunterseite 2 detektiert werden können, sind ein Bewegungssensor 19, der vorliegend als Winkelsensor ausgebildet ist, und ein Beschleunigungssensor 20 vorgesehen. Mit diesen Sensoren 19 und 20 können die Intensität der Krafteinleitung und der Abstand beziehungsweise die Abweichungen von einem vorgegebenen Abstand zwischen dem Federungsoberteil 1 und dem Federungsunterteil 2 festgestellt werden. Die von den Sensoren 19 und 20 ermittelten Daten können dabei an eine hier nicht dargestellte Steuereinrichtung weitergeleitet werden, die auf Basis der von den Sensoren 19 und 20 gelieferten Daten den Antrieb 23 beziehungsweise den Drehfeldmagnet 14 mit Strom und Spannung derart versorgt, dass einer Krafteinleitung entgegengewirkt oder sie unterstützt werden kann, sodass das Gesamtsystem immer bestrebt ist, seine vorbestimmte Nullposition einzunehmen.

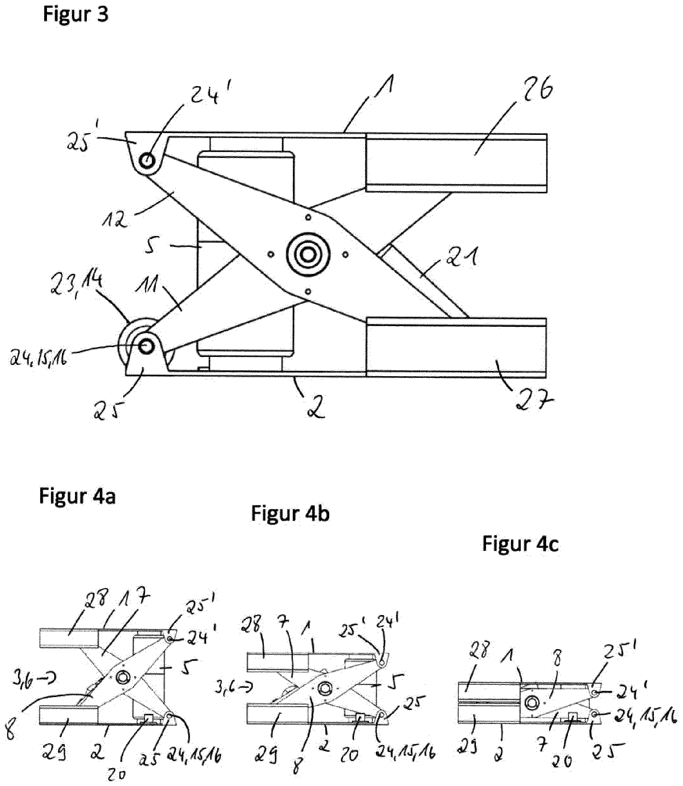

Eine derartige Nullposition ist beispielsweise in der Figur 4b dargestellt, während in den Figuren 4a die maximale Auslenkung des Gesamtsystems in die positive Z- beziehungsweise Höhenrichtung und in der Figur 4c die maximale Auslenkung des Gesamtsystems in die negative Z- beziehungsweise Höhenrichtung dargestellt ist.

Zur Dämpfung der durch die Federeinrichtung 3 nach einer Kraftbeaufschlagung eingebrachten Schwingung in die erfindungsgemäße Vorrichtung ist ein Stoßdämpfer 21 vorgesehen, der mit seinem einen Ende ebenfalls an der Loslagerquerverbindung 30 angeordnet ist, während sein anderes Ende im oberen Bereich der ersten Innenschwinge 7 der ersten Schere angeordnet ist.

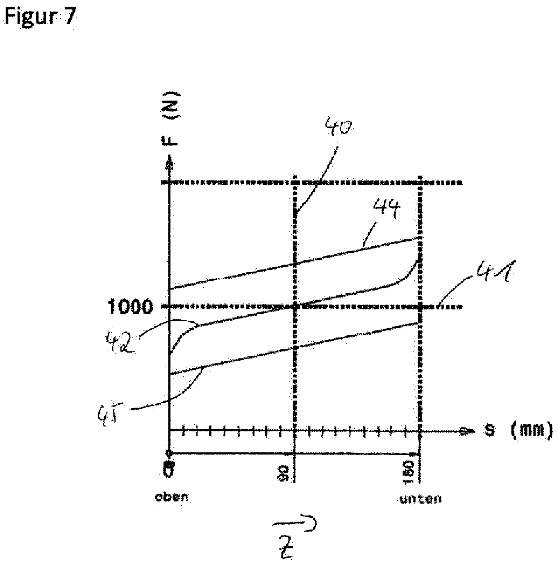

Ein entsprechendes Kraftwegdiagramm für das Stellglied 4 der hier dargestellten Ausführungsform ist dabei in Figur 7 dargestellt.

Dabei ist mit den Bezugszeichen 42 die Federkennlinie der Feder 5 dargestellt. Ferner ist eine Sollniveaulinie 40 in den Diagrammen dargestellt, die durch die erfindungsgemäße Vorrichtung eingenommen wird, wenn sie mit einem vorgegebenen Gewicht beziehungsweise einer vorgegebenen Kraft beaufschlagt wird. Beispielsweise beträgt die Auslenkung des Federungsoberteils 1 beziehungsweise die Abstandsänderung zwischen Federungsoberteil 1 und Federungsunterteil 2 bei einer Krafteinwirkung von 1000 N in etwa 90 mm.

Die Auslenkung von 90 mm ist dabei im vorliegenden Ausführungsbeispiel in der Figur 4b gezeigt, während die Figur 4a eine Auslenkung von 0 mm und die Figur 4c eine Auslenkung von 180 mm zeigt. Mit den Bezugszeichen 41 ist in dem Kraftwegdiagramm der Figur 7 eine Sollkraftlinie angezeigt, die die Kraft von 1000 N darstellen soll. Die Sollkraftlinie 41 und die Sollniveaulinie 40 schneiden sich dabei in einem Schnittpunkt, durch den auch die Federkennlinie 42 der Feder 5 läuft. Mit den Bezugszeichen 44 und 45 sind hierbei eine obere Kraftlinie und eine untere Kraftlinie angegeben. Die obere Kraftlinie 44 bezeichnet dabei die Kraft, die durch das Stellglied 4 zusätzlich zu der auf die Vorrichtung wirkende Kraft eingebracht werden kann, während die untere Kraftlinie 45 eine Kraft anzeigt, die der eingebrachten Kraft in die Vorrichtung entgegenwirkt. In dem vorliegenden Ausführungsbeispiel beträgt diese zusätzlich einzubringende Kraft in etwa 200 N.

Mithilfe der erfindungsgemäßen Vorrichtung, insbesondere wie sie in den Figuren 1 bis 3 dargestellt ist, kann somit während dem Betrieb der erfindungsgemäßen Vorrichtung die Abweichung der Federungsoberseite 1 von der Sollniveaulinie 40 minimiert werden, sodass ein damit ausgestatteter Fahrzeugsitz bei optimalem Federungs- und Dämpfungskomfort im Wesentlichen seine Lage um diese Sollniveaulinie 40 einhält.

### Bezugszeichenliste

- 1: Federungsoberteil
- 2: Federungsunterteil
- 3: Federeinrichtung
- 4: Stellglied
- 5: Feder
- 6: Schereneinrichtung
- 7: erste Innenschwinge
- 8: erste Außenschwinge
- 10: erste Schere
- 11: zweite Innenschwinge
- 12: zweite Außenschwinge
- 13: zweite Schere
- 14: Drehfeldmagnet
- 15: Welle
- 16: Koppelstange
- 19: Bewegungssensor
- 20: Beschleunigungssensor
- 21: Stoßdämpfer
- 23: Antrieb
- 24: Festlagerquerverbindung
- 24': Festlagerquerverbindung
- 25: Festlager
- 25': Festlager
- 26: Führungsschiene
- 27: Führungsschiene
- 28: Führungsschiene
- 29: Führungsschiene
- 30: Loslagerquerverbindung
- 31: Loslagerquerverbindung
- 32: Rolle
- 33: Rolle
- 40: Sollniveaulinie
- 41: Sollkraftlinie
- 42: Federkennlinie der Feder 5
- 44: obere Kraftlinie
- 45: untere Kraftlinie
- X: Längsrichtung
- Y: Breitenrichtung
- Z: Höhenrichtung

## Patentansprüche

1. Vorrichtung zum Abfedern eines Federungsoberteils (1) in wenigstens einer Raumrichtung (X, Y, Z) gegenüber einem relativ dazu bewegbaren Federungsunterteil (2), wobei zum Abfedern eine zwischen dem Federungsoberteil (1) und dem Federungsunterteil (2) wirkende Federeinrichtung (3) vorgesehen ist,
**dadurch gekennzeichnet, dass**
ein Stellglied vorgesehen ist, durch welches eine Kraft bidirektional in Wirkrichtung der Federeinrichtung (3) in die Vorrichtung einleitbar ist, wobei das Stellglied über eine Steuereinrichtung ansteuerbar ist, wobei das Stellglied einen als Drehfeldmagnet (14) ausgebildeten Antrieb (23) und eine durch den Antrieb (23) antreibbare, als Welle (15) ausgebildete Koppelstange (16) aufweist, sodass durch ein Verdrehen der Koppelstange (16) ein Abstand zwischen Federungsunterteil (2) und Federungsoberteil (1) variiert werden kann.

2. Vorrichtung nach Anspruch 1,
**dadurch gekennzeichnet, dass**
die Federeinrichtung (3) eine zwischen dem Federungsoberteil (1) und dem Federungsunterteil (2) angeordneten Feder (5) und eine das Federungsoberteil (1) mit dem Federungsunterteil (2) gegeneinander beweglich verbindende Schereneinrichtung (6) aufweist.

3. Vorrichtung nach Anspruch 2,
**dadurch gekennzeichnet, dass**
die Schereneinrichtung (6) eine erste, aus einer ersten Innenschwinge (7) und einer ersten Außenschwinge (8) bestehenden Schere (9) und eine zweite, aus einer zweiten Innenschwinge (10) und einer zweiten Außenschwinge (11) bestehenden Schere (12) aufweist.

4. Vorrichtung nach Anspruch 3,
**dadurch gekennzeichnet, dass**
der Antrieb (23) fest an dem Federungsoberteil (1) beziehungsweise dem Federungsunterteil (2) angeordnet und die als Welle (15) ausgebildete Koppelstange (16) als eine Festlagerquerverbindung (24) zwischen der ersten Innenschwinge (7) und der zweiten Innenschwinge (10) oder zwischen der ersten Außenschwinge (8) und der zweiten Außenschwinge (11) ausgebildet und in Festlager (25) drehbar gelagert ist.

5. Vorrichtung nach einem der vorhergehenden Ansprüche,
**dadurch gekennzeichnet, dass**
wenigstens ein Bewegungssensor (19) vorgesehen ist, mit dem die Bewegungen in der wenigstens einen Raumrichtung (X, Y, Z) des Federungsoberteils (1) gegenüber dem Federungsunterteil (2) feststellbar sind.

6. Vorrichtung nach einem der vorhergehenden Ansprüche,
**dadurch gekennzeichnet, dass**
ein Beschleunigungssensor (20) vorgesehen ist, mit dem Beschleunigungen zwischen dem Federungsoberteil (1) und dem Federungsunterteil (2) feststellbar sind.

7. Vorrichtung nach einem der vorhergehenden Ansprüche,
**dadurch gekennzeichnet, dass**
ein zur Dämpfung von Schwingungen der Federeinrichtung (3) ein Stoßdämpfer (21) vorgesehen ist.

8. Sitz, insbesondere Fahrzeugsitz, mit einer Vorrichtung nach einem der vorhergehenden Ansprüche.

9. Fahrzeug mit wenigstens einem Sitz nach Anspruch 8 oder mit wenigstens einer Vorrichtung nach einem der Ansprüche 1 bis 7.

## Claims

1. Device for suspending an upper suspension part (1) in at least one spatial direction (X, Y, Z) with respect to a lower suspension part (2) that is movable relative thereto, a spring device (3) that acts between the upper suspension part (1) and the lower suspension part (2) being provided for the suspending,
**characterised in that**
an actuator is provided, by means of which a force can be introduced into the device bidirectionally in the operating direction of the spring device (3), the actuator being controllable by means of a control device, the actuator comprising a drive (23) in the form of a rotary field magnet (14) and a coupling rod (16) which is in the form of a shaft (15) and can be driven by the drive (23), and therefore a distance between the lower suspension part (2) and the upper suspension part (1) can be varied by rotating the coupling rod (16).

2. Device according to claim 1,
**characterised in that**
the spring device (3) comprises a spring (5), which is arranged between the upper suspension part (1) and the lower suspension part (2), and a scissor-type device (6), which connects the upper suspension part (1) to the lower suspension part (2) such that they can move relative to one another.

3. Device according to claim 2,
**characterised in that**
the scissor-type device (6) comprises a first scissor (9) consisting of a first swing inner arm (7) and a first swing outer arm (8), and a second scissor (12) consisting of a second swing inner arm (10) and a second swing outer arm (11).

4. Device according to claim 3,
**characterised in that**
the drive (23) is fixedly arranged on the upper suspension part (1) or the lower suspension part (2), and the coupling rod (16) formed as a shaft (15) is in the form of a fixed bearing transverse connection (24) between the first swing inner arm (7) and the second swing inner arm (10) or between the first swing outer arm (8) and the second swing outer arm (11), and is rotatably mounted in a fixed bearing (25).

5. Device according to any of the preceding claims,
**characterised in that**
at least one movement sensor (19) is provided, by means of which the movements in the at least one spatial direction (X, Y, Z) of the upper suspension part (1) relative to the lower suspension part (2) can be determined.

6. Device according to any of the preceding claims,
**characterised in that**
an acceleration sensor (20) is provided, by means of which accelerations between the upper suspension part (1) and the lower suspension part (2) can be determined.

7. Device according to any of the preceding claims,
**characterised in that**
a shock absorber (21) is provided in order to absorb vibrations of the spring device (3).

8. Seat, in particular a vehicle seat, comprising an device according to any of the preceding claims.

9. Vehicle comprising at least one seat according to claim 8 or comprising at least one device according to any of claims 1 to 7.

## Revendications

1. Dispositif pour l'amortissement d'une partie supérieure de suspension (1) dans au moins une direction spatiale (X, Y, Z) par rapport à une partie inférieure de suspension (2) déplaçable par rapport à celle-ci, un dispositif à ressort (3) agissant entre la partie supérieure de suspension (1) et la partie inférieure de suspension (2) étant prévu pour l'amortissement,
**caractérisé par le fait qu'**
un actionneur est prévu au moyen duquel une force est susceptible d'être introduite bidirectionnellement dans la direction d'action du dispositif à ressort (3) dans le dispositif, l'actionneur pouvant être actionné par un dispositif de commande, l'actionneur présentant un entraînement (23) conçu en tant qu'aimant à champ tournant (14) et une tige de couplage (16) conçue en tant qu'arbre (15), susceptible d'être entraînée par l'entraînement (23), de telle sorte que l'on peut faire varier une distance entre la partie inférieure de suspension (2) et la partie supérieure de suspension (1) par une rotation de la tige de couplage (16).

2. Dispositif selon la revendication 1,
**caractérisé par le fait que**
le dispositif à ressort (3) présente un ressort (5) disposé entre la partie supérieure de suspension (1) et la partie inférieure de suspension (2) et un système de ciseaux (6) reliant de façon déplaçable l'une par rapport à l'autre la partie supérieure de suspension (1) à la partie inférieure de suspension (2).

3. Dispositif selon la revendication 2,
**caractérisé par le fait que**
le système de ciseaux (6) présente des premiers ciseaux (9) constitués par un premier bras oscillant interne (7) et un premier bras oscillant externe (8) et des seconds ciseaux (12) constitués par un second bras oscillant interne (10) et un second bras oscillant externe (11).

4. Dispositif selon la revendication 3,
**caractérisé par le fait que**
l'entraînement (23) est disposé de manière fixe sur la partie supérieure de suspension (1), respectivement la partie inférieure de suspension (2), et la tige de couplage (16) conçue en tant qu'arbre (15) est conçue en tant que liaison transversale de palier fixe (24) entre le premier bras oscillant interne (7) et le second bras oscillant interne (10) ou entre le premier bras oscillant externe (8) et le second bras oscillant externe (11) et est montée à rotation dans un palier fixe (25).

5. Dispositif selon l'une des revendications précédentes,
**caractérisé par le fait que**
au moins un capteur de mouvement (19) est prévu, avec lequel les mouvements dans ladite au moins une direction spatiale (X, Y, Z) de la partie supérieure de suspension (1) par rapport à la partie inférieure de suspension (2) sont détectables.

6. Dispositif selon l'une des revendications précédentes,
**caractérisé par le fait que**
un capteur d'accélération (20) est prévu, avec lequel des accélérations entre la partie supérieure de suspension (1) et la partie inférieure de suspension (2) sont détectables.

7. Dispositif selon l'une des revendications précédentes,
**caractérisé par le fait que**
un absorbeur de choc (21) est prévu pour l'amortissement de vibrations du dispositif à ressort (3).

8. Siège, en particulier siège de véhicule, comportant un dispositif selon l'une des revendications précédentes.

9. Véhicule comportant au moins un siège selon la revendication 8 ou comportant au moins un dispositif selon l'une des revendications 1 à 7.
